Europäisches Patentamt

(19) European Patent Office

Office européen des brevets

(11) Publication number: **0 105 596**
**A2**

(12) # EUROPEAN PATENT APPLICATION

(21) Application number: 83304958.8

(22) Date of filing: 26.08.83

(51) Int. Cl.³: **A 61 C 9/00**

(30) Priority: 26.08.82 US 411948

(43) Date of publication of application:
18.04.84 Bulletin 84/16

(84) Designated Contracting States:
AT BE CH DE FR GB IT LI LU NL SE

(71) Applicant: DENTEXCO INC.
72 Howard Park Avenue
Toronto Ontario(CA)

(72) Inventor: Jazvac, John E.

deceased(CA)

(74) Representative: Lawrence, John Gordon et al,
McNeight & Lawrence Regent House Heaton Lane
Stockport, Cheshire SK4 1BS(GB)

(54) Denture trays and method of fitting dentures.

(57) A denture tray comprises a body of thermoplastic methyl-methacrylate material which is malleable at a temperature which is mouth tolerable and which is substantially rigid at body temperature and a plurality of tooth moulds removably mounted in said tray in a predetermined rotation.

A method of manufacturing and fitting a denture plate comprises the steps of; selecting a denture tray from a set of denture trays of the aforementioned type, heating the selected tray to a mouth tolerable temperature at which it is malleable; inserting the selected tray into the mouth of a patient and hand forming and customizing the selected tray around the alveola ridge, allowing the tray to cool to a temperature at which it is stabilized and no longer malleable and thereafter removing the tray from the patient's mouth; border or muscle moulding the selected tray to fit the patient's mouth; lining the tray with final impression material and reinserting the tray into the patient's mouth to form a final impression of the denture base area and thereafter removing the tray from the patient's mouth; forming a bite block and, where necessary, removing posterior tooth moulds from the tray to prevent interference with opposing teeth to obtain the required bite registration; forming a stone model of the final impression in the selected tray; mounting the stone model and the selected tray in an articulator and adjusting the articulator to duplicate the function of the patient's maxilla and mandible and thereafter marking the model to provide an indication of the required vertical dimension and the centre line of the anterior teeth; removing the selected tray bearing the final impression from the stone model to expose the moulded area of the stone model; and forming a wax model of the required denture on the moulded area and inserting the required tooth moulds into the wax model in a conventional manner.

Fig 1

## DENTURE TRAYS AND METHOD OF FITTING DENTURES

This invention relates to improvements in denture trays and a method of manufacturing and fitting denture plates.

In the present method of manufacturing and fitting dentures, it is necessary for a patient to attend several appointments with the dentist and it is necessary for the dentist to make use of the services of a dental technician at several different stages in the fitting process. Thus, the present manufacture and fitting of dentures is time-consuming and costly and many dentists do not undertake the manufacture and fitting of dentures, preferring to leave this service to specialists.

I have found that the difficulties encountered in attempting to fit a denture tray can be greatly reduced by employing a denture tray which is malleable at a temperature which is mouth tolerable and which is substantially rigid at body temperature and which has a plurality of tooth moulds removably mounted in said tray in a predetermined rotation.

I have further found that the procedures involved in fitting and manufacturing a denture plate can be simplified by providing, for use by the dentist, a set of denture trays which enable the dentist to make a preliminary selection of a denture tray which will closely resemble the required final form of the denture plate with the result that after making the preliminary selection the dentist will have the opportunity to determine whether the final denture plate will have an acceptable appearance.

In addition, I have found that the manufacture and fitting of a denture plate can be simplified by selecting a denture tray from a set of denture trays of the type described above and thereafter fitting the tray and forming a stone model from the fitted tray with a sufficient degree of accuracy to permit the manufacture of the denture from the stone model, whereby only a minimal amount of final fitting may be required by the dentist.

According to one aspect of the present invention there is provided a denture tray comprising a body of thermoplastic methyl-methacrylate material which is malleable at a temperature which is mouth tolerable and which is substantially rigid at body temperature and a plurality of tooth moulds removably mounted in said tray in a predetermined rotation.

According to a further aspect of the present invention there is provided a method of manufacturing a denture tray comprising the steps of: thoroughly mixing, by volume, fifteen parts methyl-methacrylate polymer containing 5% plasticizer with one part methyl-methacrylate monomer and two parts ethyl-methacrylate soft curing monomer, allowing the mixture to stand for about eleven minutes, again thoroughly mixing the mixture, allowing the mixture to stand for about six minutes, forming the mixture to the required configuration of a denture tray, curing the thus formed tray by heating it to a temperature of about $170^{\circ}F$ ($76^{\circ}C$) for forty-five minutes.

According to a further aspect of the present invention there is provided a method of manufacturing and fitting a denture plate comprising the steps of: selecting a denture tray from a set of denture trays, each of which is formed from a thermoplastic material which is malleable at a temperature which is mouth tolerable and which is substantially rigid at body temperature, each tray having a plurality of tooth moulds releasably mounted therein; heating the selected tray to a mouth tolerable temperature at which it is malleable; inserting the selected tray into the mouth of a patient and hand forming and customising the selected tray around the alveola ridge of the patient's mouth while malleable; allowing the selected tray to cool to a temperature at which it is stabilised and no longer malleable and thereafter removing the selected tray from the patient's mouth; border or muscle moulding the selected tray to fit the patient's mouth; lining the selected tray with final impression material and reinserting the selected tray into the patient's mouth to form a final impression of the denture base area and thereafter removing the selected tray from the patient's mouth; forming a bite block thereby to determine the bite registration and, where necessary, removing posterior tooth moulds from the tray to prevent interference with opposing teeth to obtain the required bite registration; forming a stone model of the final impression in the selected tray; mounting the stone model and the selected tray in an articulator and adjusting the articulator to duplicate the function of the patient's maxilla and mandible and thereafter marking the model to provide an indication of the required vertical dimension and the centre line of the anterior teeth; removing the selected tray bearing the final impression from the stone model to expose the moulded area of the stone model; and forming a wax model of the required denture on the moulded area and inserting the required tooth moulds into the wax model in a conventional manner.

According to yet another aspect of the present invention there is provided a set of denture trays for use in the manufacture and fitting of dentures comprising at least eighteen trays of which; a first group of six trays, three of which are uppers and three of which are lowers and each of which is proportioned to fit a mouth having a small tuberosity area, a second group of six trays, three of which are uppers and three of which are lowers and each of which is proportioned to fit a mouth having a medium tuberosity area, a third group of six trays, three of which are uppers and three of which are lowers and each of which is proportioned to fit a mouth having a large tuberosity area, one upper and one lower of each of said groups having a short anterior tooth length, one upper and one lower of each of said groups having a medium anterior tooth length, one upper and one lower of each of said groups having a long anterior tooth length.

The invention will be more clearly understood with reference to the following detailed specification read in conjunction with the drawings wherein;

Figure 1 is a top front pictorial view of an upper denture tray;

Figure 2 is a bottom back pictorial view of a lower denture tray;

Figure 3 is a back end view of an upper denture tray of Figure 1;

Figure 4 is a plan view of the underside of the denture tray of Figure 3;

Figure 5 is a side view of the denture tray of Figure 4;

Figure 6 is a top plan view of the lower denture tray of Figure 2;

Figure 7 is a front view of the upper and lower denture trays in the position which they will assume when supported by stone models on an articulator;

Figures 8 and 8a are reproductions of photographic charts which illustrate the front and underside plan views respectively of six different upper tooth mould rotations;

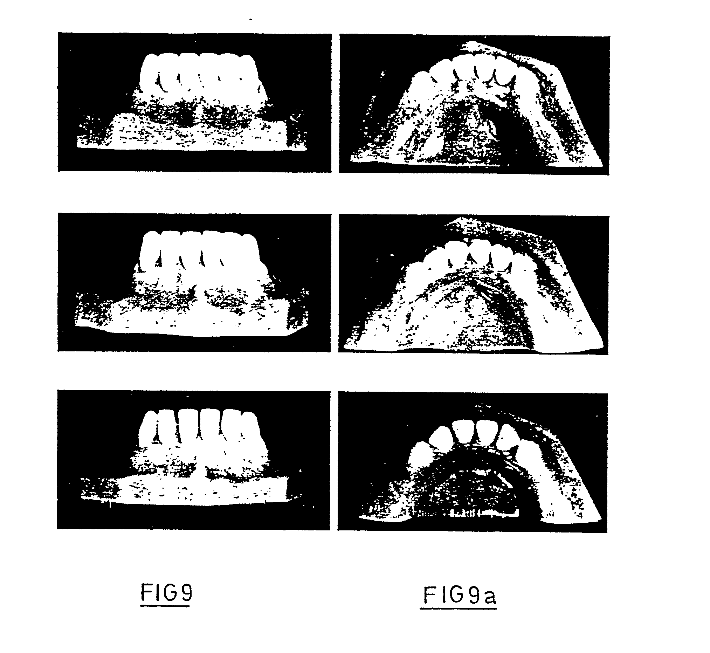

Figures 9 and 9a are reproductions of photographic charts which illustrate the front and top plan views respectively of three different lower tooth mould rotations;

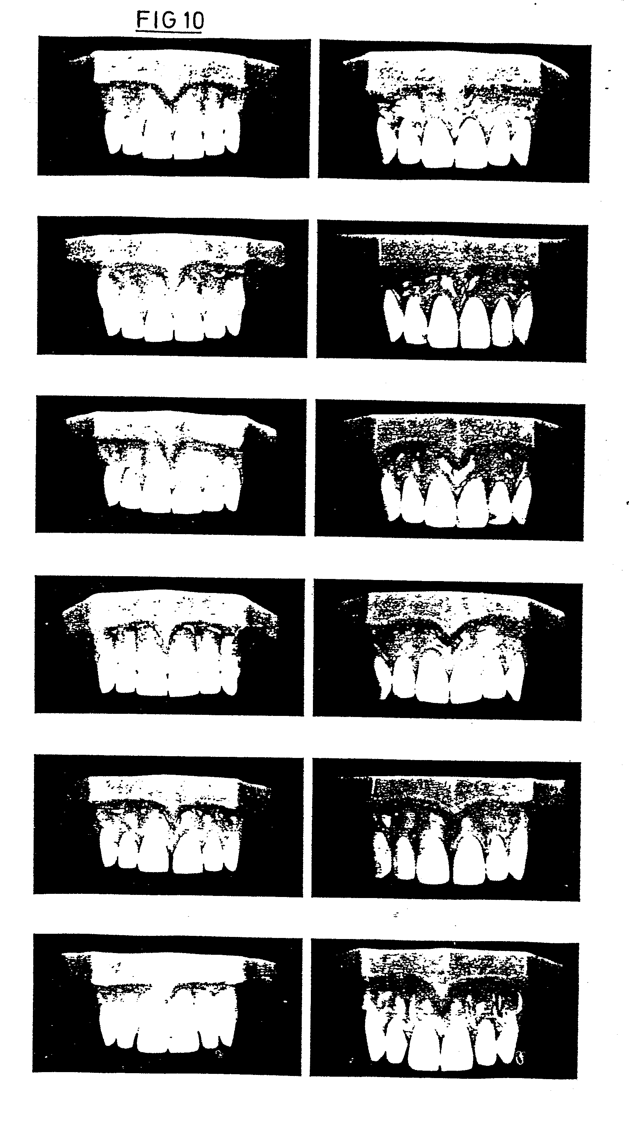

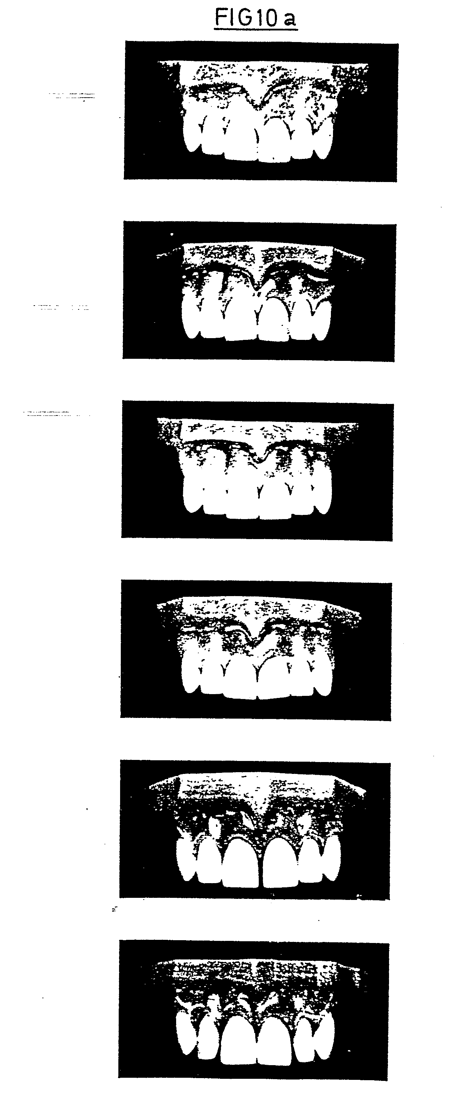

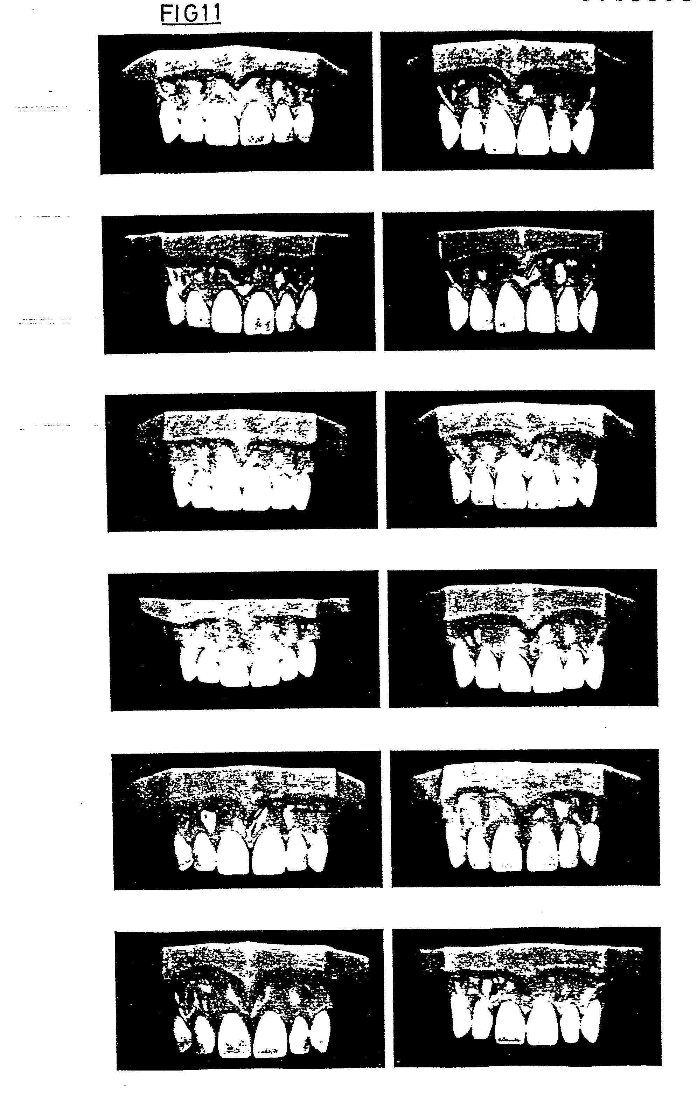

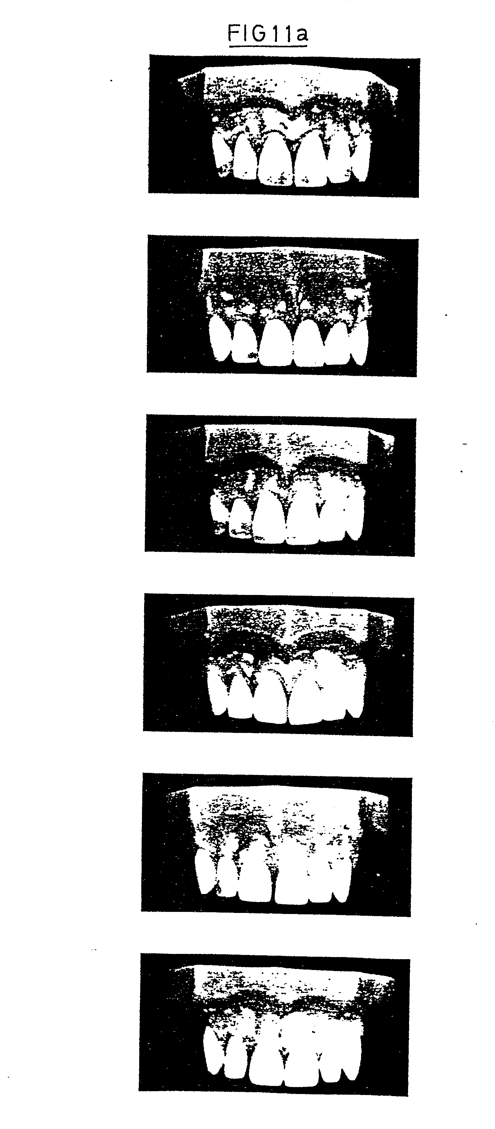

and Figures 10 and 11 are reproductions of photographic charts which illustrate the front view of a plurality of upper tooth moulds set in a plurality of supports wherein six different tooth mould configurations are illustrated in six different rotations.

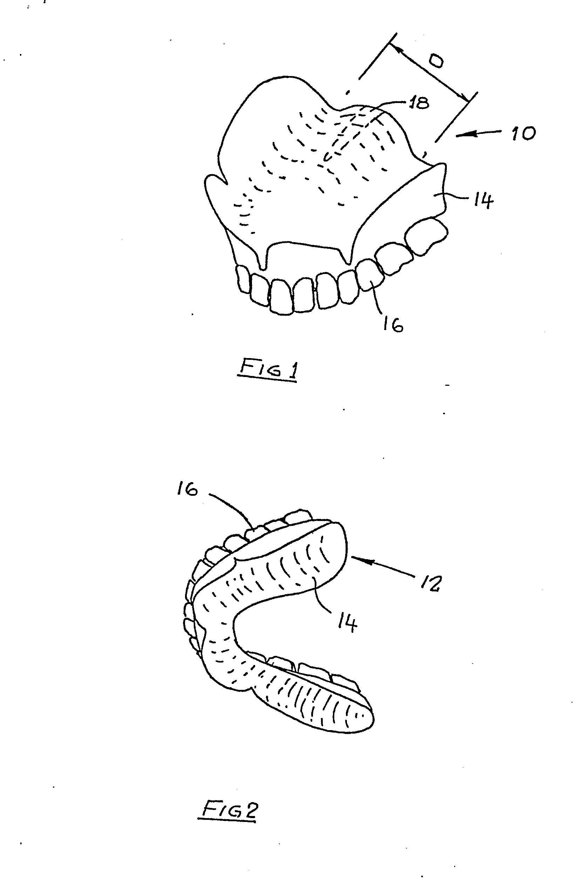

With reference to Figure 1 of the drawings, the reference numeral 10 refers generally to an upper denture tray constructed in accordance with an embodiment of the present invention.

In Figure 2 the reference numeral 12 refers generally to a lower denture tray constructed in accordance with an embodiment of the present invention.

The upper and lower denture trays 10 and 12 each consist of a tray portion 14 within which a plurality of tooth moulds 16 are set in a predetermined rotation.

The tray portions 14 are each formed from a body of thermoplastic material malleable at a temperature which is greater than normal body temperature while being mouth tolerable and which is substantially rigid or non-malleable and stable at body temperature.   A suitable plastic material for this application is a thermoplastic methyl-methacrylate material.

In order to manufacture a denture tray I thoroughly mix, by volume, about fifteen parts methyl-methacrylate polymer containing 5% plasticiser with one part methyl-methacrylate monomer and about two parts ethyl-methacrylate soft curing monomer.   I allow the mixture to stand for about eleven minutes, and I then thoroughly mix the mixture once again.   I then allow the mixture to stand for about six minutes, after which I form the mixture to the required configuration of a denture tray by pouring the mixture into the cavity of a suitably formed mould.   The thus formed tray is cured in a thermal bath by heating it to a temperature of about $170^{\circ}F$ ($76^{\circ}C$) for forty-five minutes.

In order to facilitate the fitting of the denture tray of the present invention I provide a set of denture trays in which there are at least three and preferably five different groups of trays which are distinguished from one another by the size of the tuberosity area of the tray and within each group I provide at least three upper and at least three lower trays.   One upper tray and one lower tray of each group has mounted therein tooth moulds which have a short anterior tooth length, a medium anterior tooth length and a long anterior tooth length respectively.

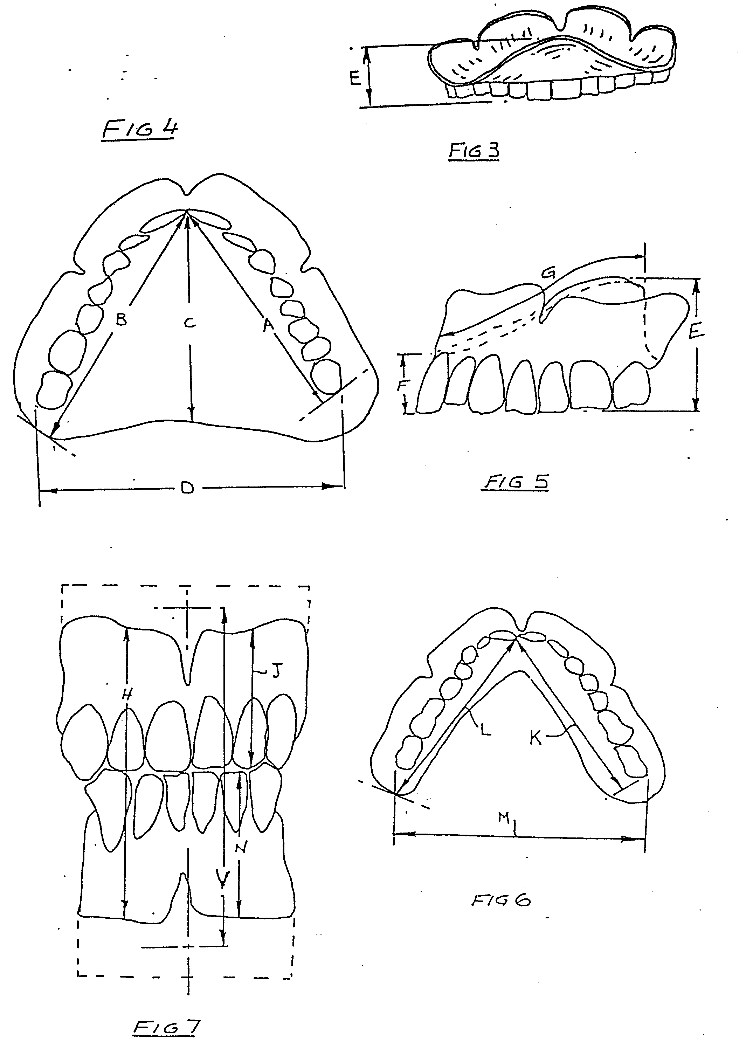

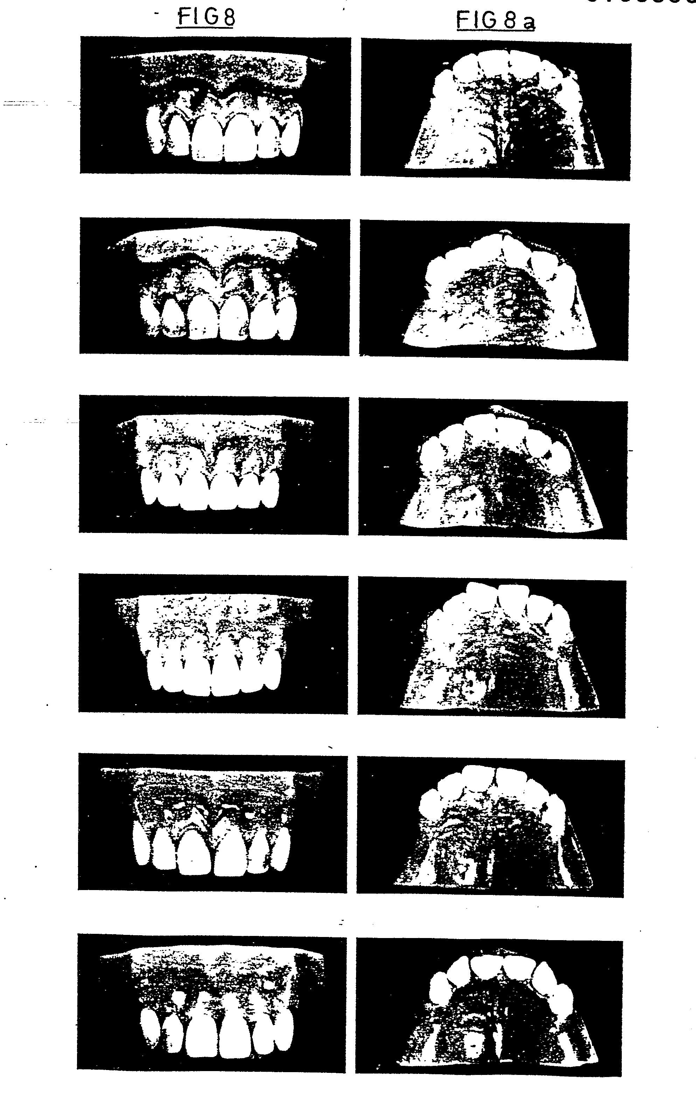

Figures 1, 3, 4, 5 and 7 illustrate the dimensions which are common to and the dimensions which distinguish the trays of one size from another. Particulars of these dimensions are set forth in Tables I and II as follows:

TABLE I

| UPPER TRAY SIZE | A | B | C | D | E1 | E2 | E3 | F1 | F2 | F3 | G | H1 | H2 | H3 | I1 | I2 | I3 |
|---|---|---|---|---|---|---|---|---|---|---|---|---|---|---|---|---|---|
| SMALL | 50 | 58 | 56 | 54 | 16 | 18 | 20 | 10 | 11 | 12 | 50 | 30 | 35 | 40 | 20 | 22 | 24 |
| MED-IUM | 50 | 62 | 56 | 58 | 12 | 14 | 18 | 9 | 10 | 12 | 52 | 30 | 35 | 40 | 20 | 22 | 24 |
| LARGE | 50 | 62 | 56 | 63 | 16 | 18 | 20 | 10 | 12 | 14 | 54 | 30 | 35 | 40 | 20 | 22 | 24 |

(DIMENSIONS (mm): E = E1 E2 E3; F = F1 F2 F3; H = H1 H2 H3; I = I1 I2 I3)

TABLE II

| LOWER | DIMENSION (mm) | | | | | |
|---|---|---|---|---|---|---|
| TRAY | | | | | N | |
| SIZE | K | L | M | N1 | N2 | N3 |
| | | | | | | |
| SMALL | 47 | 53 | 53 | 14 | 16 | 18 |
| MEDIUM | 48 | 54 | 57 | 14 | 16 | 18 |
| LARGE | 48 | 54 | 57 | 14 | 16 | 18 |

In the above Tables the dimensions are as follows:

A - is the distance from the middle of the incisal edges of the centrals to the distal of the second molars;

B - is the distance from the middle of the incisal edges of the centrals to the periphery of the tray at the Hamula notch;

C - is the distance from the middle of the incisal edges along the median line to the posterior edge of the tray to the Foval Palatin;

D - is the distance from the Buccal edge of the right second molar to the Buccal edge of the left second molar;

E (E1,E2,E3) - is the depth of the vault, which varies according to the length of the tooth mould;

F - is the height of the vault in the region of the central Papilla which varies according to the length of the tooth mould;

G - is the distance from the central Papilla region to the posterior edge of the tray in the Foval Palatin area along the median line;

H (H1,H2,H3) - is the distance between the Buccal periphery of the upper and lower trays along a line drawn down the long axes of the upper laterals when the upper and lower trays are in centric occlusion;

I (I1,I2,I3) is the distance from the Buccal periphery of the upper to the incisal edge of the lateral.

Table II provides particulars of the dimensions of the lower trays wherein;

K - is the distance from the middle of the central incisors to the distal end of the second molars;

L - is the distance from the middle of the central incisors to the periphery of the tray in the retromolar region;

M - is the distance from the Buccal of the right second molar to the Buccal edge of the left second molar;

N (N1,N2,N3) - is the distance from the Buccal periphery of the lower to the incisal edge of the lateral along the tooth's long axis.

It will be noted that the dimensions E, F, H, J and N are each subdivided to provide three alternative dimensions. These dimensions vary according to the anterior tooth lengths which are provided in small, medium and large dimensions, preferably 30mm, 35mm and 40mm respectively. This is the dimension "H" of Table I.

As indicated above the kit of trays contains a variety of trays which vary in tooth mould (A, B, C, D and P) in rotation (1, 2, 3, 4, 5, 6), vertical dimension (J) and tray size (small, medium, large). It will be noted that additional tray sizes to provide

"extra small" and "extra large" may also be provided to increase the size of the set.

In the minimum set there are a total of eighteen trays of which the first group has a small tuberosity area, a second group has a medium tuberosity area and a third group has a large tuberosity area. Within each group three of the trays are uppers and three are lowers. One upper and one lower of each group has a short anterior tooth length and one upper and one lower of each group has a medium anterior tooth length and one upper and one lower of each group has a long anterior tooth length. With reference to Table I it will be seen that the first group will include three uppers of a small tuberosity area distinguished from one another by the dimensions J1, J2 and J3. In this minimum set D and F are one or other of the dimensions E1, E2 and E3 and F1, F2 and F3. In the more expensive set additional trays may be provided in which the dimensions E1, E2, E3, F1, F2 and F3 are provided. It should be noted that the dimensions E and F vary according to the length of the tooth mould as do the dimensions H and J.

TABLE III

| UPPER DIMENSION | | A | B | C | D | E | F | G | H | J |
|---|---|---|---|---|---|---|---|---|---|---|
| SMALL | I | 50 | 58 | 56 | 54 | 16 | 10 | 50 | 30 | 20 |
| | II | " | " | " | " | " | " | " | " | 22 |
| | III | " | " | " | " | " | " | " | " | 24 |
| MEDIUM | I | " | 62 | " | 58 | 12 | 9 | 52 | 30 | 20 |
| | II | " | " | " | " | " | " | " | " | 22 |
| | III | " | " | " | " | " | " | " | " | 24 |
| LARGE | I | " | " | " | 63 | 16 | 10 | 54 | 30 | 20 |
| | II | " | " | " | " | " | " | " | " | 22 |
| | III | " | " | " | " | " | " | " | " | 24 |

Table III provides dimension particulars of nine uppers forming the minimum set which may be combined with the lowers of Table II to provide a total of 18 trays. It will be understood from a comparison of Tables I and III that the total number of small, medium and large upper trays may be extended by adding additional trays in which the dimension E is a dimension E2 or E3 and the dimension F is a dimension F2 or F3.

In use, when a complete set of dentures are required consisting of an upper and a lower, the dentist must initially determine the tray size which is required as between small, medium and large. This can be determined by taking measurements from either the old denture, if available, or the tuberosity area of the mouth to determine the dimension "D". If, for example, the dimension D is approximately 58 millimetres the dentist would select the medium tray. If a variety of medium trays are provided in which the dimensions E and F are varied the dentist would by observation or measurement determine which of these proportions more closely approximates the tuberosity area of the patient. If the required tuberosity proportions are not available the dentist may cut the upper tray of Figure 1 along the lines 18 so that the proportions may be expanded or contracted as required to fit the patient. A similar selection is made for the purposes of selecting the appropriate lower tray. It is then necessary to determine the required anterior tooth length. The anterior tooth length is a dimension H which is measured when the upper and lower trays are in centric occlusion and is the distance between the Buccal periphery of the upper and lower on a line drawn down the long axis of the upper laterals and as indicated above is 30, 35 or 40. This range can be automatically expanded by combining a small upper having a J dimension J1 with a small lower having an N dimension N2 or N3 or any combination of dimensions N1, N2 and N3 with any J dimension J1, J2 or J3. If the required anterior tooth length is not available from this combination it is merely necessary for the dentist to draw a line with a permanent marker showing the desired tooth length on the centrals, when the fitting technique is completed. Furthermore, if a 40 mm tray is too short it can be built up to the desired length with the use of compound stops, after the tray has been customised,    .

Having selected the required tray, the selected tray is then heated by immersing it in water until it is heated to a temperature of about 165 to 175$^{o}$F (74 to 79$^{o}$C), which is a mouth tolerable temperature at which the selected tray is malleable. The heated selected tray is then inserted into the patient's mouth and hand-formed or customised around the alveola ridge of the patient's mouth. The heated tray will cool rapidly to a temperature at which it is stabilised and therefore not malleable. Cooling from the malleable temperature to the stable temperature occurs in a matter of seconds. Generally, however, sufficient time is available to enable the tray to be shaped to the configuration of the patient's mouth before it stabilises. If the tray cannot be properly fitted before it stabilises it is merely necessary to reheat the tray and repeat the process.

The dentist then carries out a border moulding or muscle moulding process. The tray is then lined with final impression material and reinserted into the patient's mouth to form a final impression of the denture base area and thereafter the selected tray is removed from the patient's mouth.

When a complete set of dentures is required the above steps are repeated with the second tray which will generally be the lower tray. This provides both upper and lower trays. The bite registration is then determined with bite registration paste wax and including, if necessary, the removal of posterior tooth moulds to prevent interference which might prevent the required registration.

Stone models are then formed of the final impressions in the selected trays. The stone models and selected trays are then mounted in an articulator which is adjusted to articulate to duplicate the functions of the patient's maxilla and mandible. The selected trays bearing the final impression are then removed from the stone models to expose the moulded areas of the stone models. A wax base is then formed on the exposed moulded area of the stone models and the tooth moulds may be removed from their selected tray and set into the wax base in the predetermined rotation and centre line and vertical length. The wax base is manually carved to the required configuration so that it looks like the patient's gum area. The denture is then formed in a lost wax moulding process in which a hard plastic material is moulded about the tooth moulds to form a finished denture.

If only upper tray is required an alginate impression of the opposing teeth is formed which is used for the purposes of forming a stone model of the lower teeth which is in turn used in the forming of the denture as described above.

From the foregoing it will be apparent that the dentist is merely required to determine the required tray size, vertical dimension, mould form and rotation and to specify these to the technician responsible for manufacture of the final denture. In addition, the dentist customizes the selected tray by immersing it in water for 30 seconds to heat it to a temperature of the order of $165^{\circ}$ to $175^{\circ}F$ or $74^{\circ}$ to $79^{\circ}C$. The tray is then inserted in the patient's mouth and by placing light alternate pressure throughout the denture base it will conform perfectly to the ridge and vault of the patient's mouth. The dentist then checks for any over extension of the flanges which may be removed with scissors or a carbide burr. In the event of an extremely high pallet, the tray can be built up with compound or simply split by cutting it with scissors and filling the gap with compound. When the tray has been customized it should not interfere with normal positioning of the muscles. It should contain both hamular notches and it should extend 2mm posterior to the vibrating line. If the required fit is not obtained on the first heating operation the tray can be reheated and reformed. The dentist is also required to carry out a border moulding process. For the best results in muscle moulding it is recommended that the dentist use modelling compound sticks. While constructing the border of the denture to coincide with all of the anatomical land marks of the oral cavity the dentist should extend the periphery of the tray so as not to interfere with any of the muscular attachments. When border moulding has been finished the dentist should scrape off approximately 1/4 to 1/2 mm of compound all around so the final impression material may flow freely.

The dentist then measures the vertical dimension in a conventional manner and records it on a work order. The upper and lower trays are then positioned in the patient's mouth. At this point the lower tray does not need to be customized. With the trays in position, the dentist remeasures the vertical dimension. If the vertical dimension is 5mm or more greater than that which is required a smaller lower vertical tray, that is to say a tray having a smaller N dimension, should be selected. This tray is then customized and with this tray in position the vertical dimension is then remeasured.

If desired, a fox plate may be used to orient the maxillary denture with the Alatragus line and Frankfort plane. This procedure is optional in view of the fact that it is very easily and expertly completed in the laboratory by the laboratory technicians. If the dentist wishes to use a fox plate the procedure is as follows: the upper posterior teeth are removed with forceps and two wax strips are luted in position. The tray and the fox plate are together inserted into the mouth and adjusted until the maxillary denture coincides with the Alatragus line and Frankfort plane.

With regard to the lower plate the same basic steps are followed as those required to provide the upper. In customising, the lower tray should contain both retromolar pads and no interference with the normal positioning of oral muscular attachments.

The dentist also takes an impression in a regular manner using any preferred final impression material such as a zinc-oxide based material. The upper and lower trays are then reinserted into the mouth and the patient is instructed to close until the trays first touch. The dentist then measures the vertical dimension and compares the dimension with the measurements previously recorded. These two measurements should be equal. If the dimensions are not equal and after readjusting the tray, there is a discrepancy, the dentist records the final measurement on the required work order. Bite registration may then be taken in wax or bite registration paste in a regular manner. Care should be taken in order to obtain an accurate bite registration as this is important in subsequent operations. It is suggested that the dentist check the centric relation again for accuracy. Before the patient's appointment is terminated the dentist should check the mid-line, tooth shade and tooth length. If the mid-line is off, the dentist merely marks the required position on the centrals. The tooth shade is prescribed on the work order. If the tooth length is too much the dentist merely marks on the centrals the desired length. If the tooth length is too little an appropriate note is made on the work order with instructions to increase.

Having terminated the appointment with the patient the dentist is then required to pour up a stone model and transport the stone model along with the selected plate and appropriate work order to the technician. The technician then forms the finished denture as previously described and the finished denture is returned to the dentist. In the second appointment with the patient the dentist inserts the denture in a regular manner and makes any required occlusion adjustment in a conventional manner.

The same basic steps followed in the fabrication of complete upper and lower dentures are used in the completion of a single denture, i.e. tooth and tray selection, muscular moulding and impression taking. The vertical dimension is established with the denture out in the regular manner. If there is interference with exfoliated, angulated or rotated natural teeth, the posterior teeth are removed from the selected tray with forceps after border moulding and taking of the final impression. Two wax strips are luted in position. Centric relation and bite registration are then easily recorded by having the patient close into the softened wax to the original vertical dimension. An alginate impression is taken of the natural teeth and a stone model of the alginate impression is formed together with the stone model of the selected tooth tray. The stone models are then processed as previously described.

From the foregoing it will be apparent that the denture trays system which I provide for use in the production of dentures will greatly reduce the work required by a dentist in order to manufacture dentures.

Various modifications of the tray of the present invention are also possible to obtain further advantages. For example, the lower tray may be formed with the six anterior tooth moulds removably mounted therein, there being no posterior tooth moulds provided. This form of lower tray simplifies the taking of the bite registration because there is no possibility of interference between the posterior tooth moulds of the upper and lower trays during the bite registration closing. Similarly the bite registration may be simplified by removing the second molars.

These and other modifications will be apparent to those skilled in the art.

## CLAIMS

1.      A denture tray comprising a body of thermoplastic methyl-methacrylate material which is malleable at a temperature which is mouth tolerable and which is substantially rigid at body temperature and a plurality of tooth moulds removably mounted in said tray in a predetermined rotation.

2.      A denture tray as claimed in claim 1 in the form of a lower tray having only six anterior tooth moulds.

3.      A denture tray as claimed in claim 1 in the form of an upper tray having no second molar tooth moulds.

4.      A method of manufacturing a denture tray comprising the steps of:

a) thoroughly mixing, by volume, fifteen parts methyl-methacrylate polymer containing 5% plasticizer with one part methyl-methacrylate monomer and two parts ethyl-methacrylate soft curing monomer;

b) allowing the mixture to stand for about eleven minutes;

c) again thoroughly mixing the mixture;

d) allowing the mixture to stand for about six minutes;

e) forming the mixture to the required configuration of a denture tray;

f) curing the thus formed tray by heating it to a temperature of about $170^{\circ}F$ ($76^{\circ}C$) for forty five minutes.

5.‘    A method of manufacturing and fitting a denture plate comprising the steps of:

a) selecting a denture tray from a set of denture trays each of which is formed from a thermoplastic material which is malleable at a temperature which is mouth tolerable and which is substantially rigid at body temperature, each tray having a plurality of tooth moulds releasably mounted therein;

b) heating the selected tray to a mouth tolerable temperature at which it is malleable;

c) inserting the selected tray into the mouth of a patient and hand-forming and customising the selected tray around the alveola ridge of the patient's mouth while malleable;

d) allowing the selected tray to cool to a temperature at which it is stabilised and no longer malleable and thereafter removing the selected tray from the patient's mouth;

e) border or muscle moulding the selected tray to fit the patient's mouth;

f) lining the selected tray with final impression material and reinserting the selected tray into the patient's mouth to form a final impression of the denture base area and thereafter removing the selected tray from the patient's mouth;

g) forming a bite block thereby to determine the bite registration and, where necessary, removing posterior tooth moulds from the tray to prevent interference with opposing teeth to obtain the required bite registration;

h) forming a stone model of the final impression in the selected tray;

0105596

i) mounting the stone model and the selected tray in an articulator and adjusting the articulator to duplicate the function of the patient's maxilla and mandible and thereafter marking the model to provide an indication of the required vertical dimension and the centre line of the anterior teeth;

j) removing the selected tray bearing the final impression from the stone model to expose the moulded area of the stone model, and

k) forming a wax model of the required denture on the moulded area and inserting the required tooth moulds into the wax model in a conventional manner.

6. A method as claimed in claim 5 wherein the tooth moulds are removed from the selected tray and implanted in the wax model whereby the tooth moulds of the denture are the same tooth moulds as those of the selected tray.

7. A method as claimed in claim 5 wherein the selected denture tray is an upper denture tray.

8. A method as claimed in claim 5 wherein the selected denture tray is a lower denture tray.

9.     A method as claimed in claim 8 wherein the tooth moulds are in the form of six anterior tooth moulds.

10.    A method of manufacturing and fitting a denture including an upper denture plate and a lower denture plate comprising the steps of:

a) selecting an upper denture tray and a lower denture tray from a set of denture trays each of which is formed from a thermoplastic material which is malleable at a temperature which is mouth tolerable and which is substantially rigid at body temperature, each tray having a plurality of tooth moulds releasably mounted therein;

b) heating a first of said selected trays to a mouth tolerable temperature at which it is malleable;

c) inserting the heated first tray into the mouth of a patient and hand-forming and customising the selected first tray around the alveola ridge of the patient's mouth while malleable;

d) allowing the selected tray to cool to a temperature at which it is stabilised and no longer malleable and thereafter removing the selected tray from the patient's mouth;

e) border moulding or muscle moulding the selected tray to fit the patient's mouth;

f) lining the selected tray with final impression material and reinserting the selected tray into the patient's mouth to form a final impression of the denture base area and thereafter removing the selected tray from the patient's mouth;

g) heating a second of said selected trays to a mouth tolerable temperature at which it is malleable;

h) inserting the heated second tray into the mouth of a patient and hand-forming and customising the selected second tray around the alveola ridge of the patient's mouth while malleable;

i) allowing the selected second tray to cool to a temperature at which it is stabilised and no longer malleable and thereafter removing the selected second tray from the patient's mouth;

j) border moulding or muscle moulding the selected second tray to fit the patient's mouth;

k) lining the selected second tray with final impression material and reinserting the selected second tray into the patient's mouth to form a final impression of the denture base area and thereafter removing the selected second tray from the patient's mouth;

l) forming a stone model of the final impression in the first and second selected trays;

m) mounting the stone models and their associated first and second selected trays in an articulator and adjusting the articulator to duplicate the function of the patient's maxilla and mandible;

n) marking the stone model to provide an indication of the required vertical dimension and the centre line of the anterior teeth;

o) removing the first and second selected trays bearing the final impression from the stone model to expose the moulded area of the stone model; and

p) forming a wax model of the required denture on each moulded area and inserting the required tooth moulds into each wax model in a conventional manner.

11. A set of denture trays for use in the manufacture and fitting of dentures comprising at least eighteen trays of which;

a) a first group of six trays, three of which are uppers and three of which are lowers and each of which is proportioned to fit a mouth having a small tuberosity area;

b) a second group of six trays, three of which are uppers and three of which are lowers and each of which is proportioned to fit a mouth having a medium tuberosity area;

c) a third group of six trays, three of which are uppers and three of which are lowers and each of which is proportioned to fit a mouth having a large tuberosity area;

d) one upper and one lower of each of said groups having a short anterior tooth length, one upper and one lower of each of said groups having a medium anterior tooth length, one upper and one lower of each of said groups having a long anterior tooth length.

FIG 1

FIG 2

0105596

FIG 3

FIG 4

FIG 5

FIG 7

FIG 6

FIG 8

FIG 8 a

3/8

0105596

FIG9

FIG9a

FIG 10

0105596

FIG 10 a

FIG11

0105596

FIG 11a